(19) **Europäisches Patentamt**

**European Patent Office**

**Office européen des brevets**

(11) Veröffentlichungsnummer:

# 0 033 989
## A1

⑫ **EUROPÄISCHE PATENTANMELDUNG**

㉑ Anmeldenummer: **81200096.6**

㉒ Anmeldetag: **28.01.81**

(51) Int. Cl.³: **F 02 F 3/00**, F 16 J 1/16, B 22 D 19/00

㉚ Priorität: **12.02.80 DE 3005082**

㊸ Veröffentlichungstag der Anmeldung: **19.08.81** **Patentblatt 81/33**

㊳ Benannte Vertragsstaaten: **DE FR GB IT SE**

㉛ Anmelder: **KARL SCHMIDT GmbH, Christian-Schmidt-Strasse 8/12, D-7107 Neckarsulm (DE)**

㉒ Erfinder: **Steidle, Werner, Ing., Rosenweg 4, D-7107 Bad Friedrichshall (DE)**

㉛ Vertreter: **Fischer, Ernst, Dr., Reuterweg 14, D-6000 Frankfurt am Main 1 (DE)**

(54) **Leichtmetallkolben.**

(57) Bei einem Leichtmetallkolben (2), in dessen Kolbenbolzenbohrungen Radiallager (3, 6) eingegossen sind, ist zur Herstellung einer festen Verbindung zwischen Radiallager (3, 6) und Kolbenwerkstoff das Radiallager (3, 6) am Aussenumfang mit einer Eisenschicht (7, 8) überzogen, die über eine intermetallische Zwischenschicht mit dem Kolbenwerkstoff verbunden ist.

A 6702

0033989
08.02.1980
-DRQ/GKP-

KARL SCHMIDT GMBH
Christian-Schmidt-Straße 8/12
7107 Neckarsulm

Prov. Nr. 8445 KS


## Leichtmetallkolben


Gegenstand der Erfindung ist ein Leichtmetallkolben für Brennkraftmaschinen, in dessen in den Kolbennaben befindlichen Kolbenbolzenbohrungen Radiallager eingegossen sind.

In der DE-AS 25 36 992 ist vorgesehen, in den Kolbenbolzenbohrungen eines Leichtmetallkolbens ein aus einer gekneteten Aluminiumlegierung, die vorzugsweise aus dem gleichen Werkstoff wie der Kolben selbst besteht, gefertigtes Radiallager einzugießen. Bekannt ist auch, solche Radiallager in die Kolbenbolzenbohrungen mit Übermaß einzusetzen, so daß der Kolbenwerkstoff aufschrumpfen kann.

Werden solche Radiallager im kalten Zustand eingegossen, so verhindert die infolge hoher Affinität des Aluminiums zum Sauerstoff am Außenumfang der Radiallager vorhandene Oxidhaut eine metallische Verbindung zwischen dem Radiallager und dem Kolben.

Für den Fall, daß das Radiallager vor dem Eingießen angewärmt wird, kommt es zwar an den Stellen, an denen die Oxidhaut weggeschwemmt wird, zu einer metallischen Verbindung, jedoch führt die an einer anderen Stelle im Kolben geschwemmte Oxidhaut zum Ausfall des Kolbens.

- 2 -

Bei Kolben, bei denen das Radiallager eingeschrumpft ist, werden zwar die Risse im Kolben vermieden, jedoch kommt es zu einer Beschädigung des Radiallagers. Das ist darauf zurückzuführen, daß die Beanspruchung vom Kolbenwerkstoff aufgenommen wird; dabei verformt sich der Kolbenwerkstoff plastisch, wodurch eine Spaltbildung im inneren Bereich zwischen Radiallager und Kolbenwerkstoff hervorgerufen wird. Infolge dieses Zustandes wirken jetzt Biegemomente an dem Radiallager, die entweder zum Lockern und Verschieben des Radiallagers oder zum Umfangriß führen.

Es ist die Aufgabe der vorliegenden Erfindung, diesem Mangel abzuhelfen und eine feste Verbindung zwischen dem in den Kolbenbolzenbohrungen angeordneten Radiallager und dem Kolbenwerkstoff zu schaffen.

Gelöst ist diese Aufgabe durch einen Leichtmetallkolben, in dessen in den Bolzennaben befindlichen Kolbenbolzenbohrungen Radiallager bzw. Radiallagersegmente eingegossen sind, die erfindungsgemäß aus einem Werkstoff höherer Festigkeit als das Leichtmetall bestehen, die an ihrem Außenumfang mit einer chemisch oder galvanisch abgeschiedenen Eisenschicht überzogen und an der Berührungsfläche zwischen Eisen- und Leichtmetallwerkstoff über eine intermetallische Zwischenschicht mit dem Kolben verbunden sind.

Die intermetallische Zwischenschicht wird in der Weise erzeugt, daß die Eisenschicht mit einer Schmelze aus Aluminium oder Aluminiumlegierung solange in Berührung gebracht wird, bis es zur Bildung eines Eisen-Aluminium-Legierungsfilms auf dem Radiallager kommt, an den noch im flüssigen Zustand der Kolbenwerkstoff angegossen wird.

0033989

Eine solche Verbindung von Radiallager und Kolben ermöglicht die gezielte Anordnung von Radiallager oder - Lagersegmenten in den Bereichen, in denen die größte Belastung erfolgt.

Die intermetallische Verbindungsschicht weist eine Festigkeit von 40 bis 60 N/mm$^2$ auf.

Vorzugsweise bestehen die Radiallager aus Gleitwerkstoffen auf der Basis von Kupfer, wie z.B. CuAl10Ni, CuSn8, CuAl10Fe.

Die mit der Erfindung erzielten Vorteile sind darin zu sehen, daß die Bolzennaben hoch belastbar sind und die Kolbenabreißfestigkeit höher als bei Kolben ist, bei denen das Radiallager ohne metallische Verbindung in die Kolbenbolzenbohrungen eingesetzt sind.

Da der Kolbenwerkstoff und der Werkstoff des Radiallagers einen annähernd gleichen bzw. gleichen Ausdehnungskoeffizienten aufweisen, erfolgt eine gleichartige Beanspruchung. Bei kleinerem Ausdehnungswert des Radiallagers schrumpft der Kolbenwerkstoff auf das Radiallager auf, wodurch im Umgußbereich Zugspannungen entstehen. Diese Schrumpfspannungen werden jedoch im Motorbetrieb abgebaut, so daß die intermetallische Verbindungsschicht frei von Eigenspannungen ist. Die Beanspruchung entspricht damit einer solchen eines Einmetallkolbens.

Der erfindungsgemäß gestaltete Kolben ist in der Zeichnung beispielhaft dargestellt:

0033989

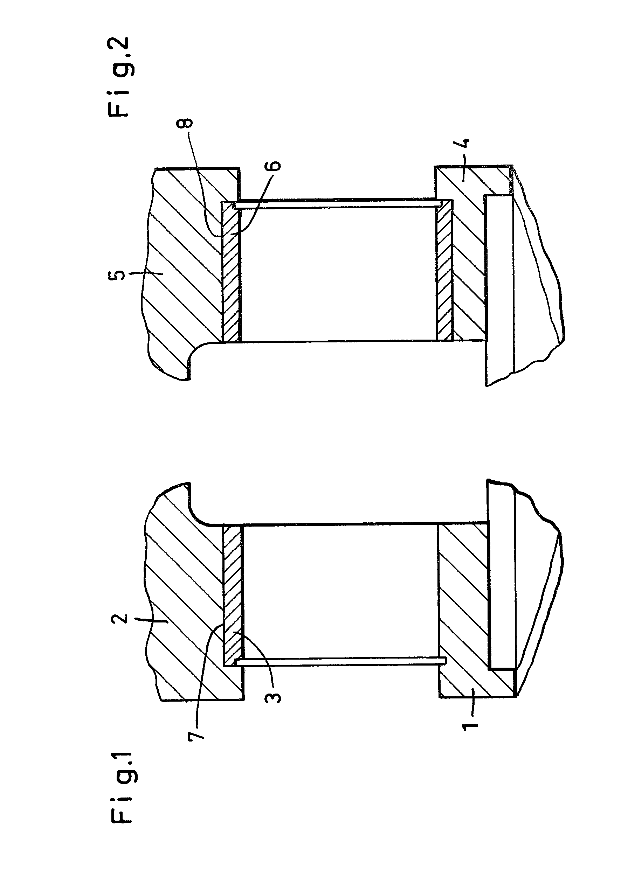

Die Fig. 1 zeigt eine ausschnittsweise Darstellung eines Querschnitts durch eine Kolbennabe 1 des Leichtmetallkolbens 2, in deren oberem Scheitelbereich ein Radiallagersegment 3 aus einer Kupferlegierung des Typs CuAl10Fe eingegossen ist.

In Fig. 2 ist ausschnittsweise der Querschnitt durch die Kolbennabe 4 des Leichtmetallkolbens 5 dargestellt, in die ein Radiallager 6 aus dem Werkstoff CuAl10Ni eingegossen ist. Auf dem Umfang des Radiallagers 6 und des Radiallagersegments 3 befindet sich eine auf galvanischem Wege abgeschiedene Eisenschicht 7, 8, die über eine intermetallische Zwischenschicht mit dem Kolbenwerkstoff verbunden ist.

PATENTANSPRÜCHE
----------------

1. Leichtmetallkolben, insbesondere für Brennkraftmaschinen, in dessen in den Bolzennaben befindlichen Kolbenbolzenbohrungen Radiallager bzw. Radiallagersegmente eingegossen sind, **dadurch gekennzeichnet,** daß das aus einem Werkstoff höherer Festigkeit als das Leichtmetall bestehende Radiallager (6) bzw. Radiallagersegment (3) am Außenumfang mit einer chemisch oder galvanisch abgeschiedenen Eisenschicht (7, 8) überzogen und an der Berührungsfläche zwischen Eisen- und Leichtmetallwerkstoff über eine intermetallische Zwischenschicht mit dem Kolben verbunden ist.

2. Leichtmetallkolben nach Anspruch 1, **dadurch gekennzeichnet,** daß als Werkstoff für das Radiallager (6) bzw. Radiallagersegment (3) eine Lagerlegierung auf Kupferbasis vorzugsweise des Typs CuAl10Ni, CuSn8, CuAl10Fe verwendet wird.

Fig.2

Fig.1

**Europäisches Patentamt**

**EUROPÄISCHER RECHERCHENBERICHT**

0033989

EP 81 20 0096

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | | KLASSIFIKATION DER ANMELDUNG (Int. Cl.) |
| A/D | <u>DE - A - 2 607 624</u> (SCHMIDT)<br>* Figur 1; Seite 1, Absatz 1 bis Seite 2, Absatz 4 * | 1 |
| | <u>DE - A - 2 639 294</u> (MAHLE)<br>* Seite 2, Absatz 3 * | 1 |
| | <u>FR - A - 2 190 553</u> (GRUBER)<br>* Seite 6, Zeilen 1-20 * | 1 |
| | <u>DE - C - 901 104</u> (FAIRCHILD)<br>* Seite 1, Zeilen 1-19 * | 1 |
| | <u>GB - A - 133 282</u> (ALLEN)<br>* Seite 1, Zeilen 5-21 * | 1 |
| A | <u>GB - A - 1 207 807</u> (HOLROYD)<br>* Seite 1, Zeilen 9-80 * | 2 |

**KLASSIFIKATION DER ANMELDUNG (Int. Cl.)**

F 02 F 3/00
F 16 J 1/16
B 22 D 19/00

**RECHERCHIERTE SACHGEBIETE (Int. Cl.)**

F 02 F 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05.05.1981 | WASSENAAR |

EPA form 1503.1   06.78